(19) Europäisches Patentamt
European Patent Office
Office européen des brevets

(11) EP 4 365 132 A1

(12) EUROPEAN PATENT APPLICATION
published in accordance with Art. 153(4) EPC

(43) Date of publication:
**08.05.2024 Bulletin 2024/19**

(21) Application number: **22833571.7**

(22) Date of filing: **28.06.2022**

(51) International Patent Classification (IPC):
***C01B 21/086*** *(2006.01)* ***C01B 21/093*** *(2006.01)*

(52) Cooperative Patent Classification (CPC):
**C01B 21/086; C01B 21/093;** Y02E 60/10

(86) International application number:
**PCT/KR2022/009210**

(87) International publication number:
**WO 2023/277515 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2021 KR 20210085426**
**13.10.2021 KR 20210136110**

(71) Applicants:
- **Chunbo Co., Ltd**
**Chungju-si, Chungcheongbuk-do 06095 (KR)**
- **Chunbo Advanced Materials Co., Ltd.**
**Chungju-si, Chungcheongbuk-do 27459 (KR)**

(72) Inventors:
- **LEE, Sang Yul**
**Chungju-si, Chungcheongbuk-do 27459 (KR)**
- **PARK, Yil Sung**
**Suwon-si, Gyeonggi-do 16690 (KR)**
- **MOON, Choong Sun**
**Chungju-si, Chungcheongbuk-do 27459 (KR)**

(74) Representative: **Patentanwaltskanzlei Matschnig & Forsthuber OG**
**Biberstraße 22**
**Postfach 36**
**1010 Wien (AT)**

# (54) BIS(FLUOROSULFONYL)IMIDE ALKALI METAL SALT

(57) The present invention relates to a bis(fluorosulfonyl)imide alkali metal salt (MFSI) having decomposition stability for lithium hexafluorophosphate ($LiPF_6$) and a manufacturing method therefor.

EP 4 365 132 A1

## Description

### Field of Invention

The present invention relates to a bis(fluorosulfonyl)imide alkali-metal salt (MFSI) with decomposition stability for lithium hexafluorophosphate ($LiPF_6$), and a method for producing the same.

### Background of Invention

With the popularization of mobile devices, commercialization of electric vehicles, and increasing demand for electric storage devices, secondary batteries with performance such as high power, high energy density, and high discharge voltage are being developed.

A lithium secondary battery includes a negative electrode, a positive electrode, a separator, and an electrolyte solution.

The electrolyte serves as a medium for movement of lithium ions between the positive electrode and the negative electrode and improves thermal, electrical, and physical safety of the battery, which consists of a solvent, salt, and various additives. As the salt, lithium hexafluorophosphate ($LiPF_6$) is mainly used, which is relevant to ionic conductivity, thermal stability and electrochemical stability, and is the most important source of lithium. The solvent serves to dissociate the salt, and carbonate and ester-based solvents are mainly used. Depending on the type of solvent used, bulk ionic conductivity, viscosity, density, wettability, etc. are determined. Additives are numerous and are relevant to formation of solid electrolyte interphase (SEI).

On the other hand, lithium hexafluorophosphate ($LiPF_6$) as a lithium salt has excellent performance and is used as an electrolyte in an electrolyte solution due to its relatively low price, but has the disadvantage of being decomposed in the form of hydrofluoric acid gas.

In order to overcome the above disadvantages, LiTFSI (lithium bis(trifluoromethanesulfonyl)imide) and LiFSI (lithium bis(fluorosulfonyl)imide) have been developed. These salts show little or no spontaneous decomposition and are more stable to hydrolysis than $LiPF_6$.

Therefore, $LiPF_6$, LiFSI, $LiPO_2F_2$, lithium difluorooxalate phosphate (LiDFOP), lithium bisolsalate borate (LiBOB), and the like are recently used as electrolytes, especially for electric vehicles.

### Summary of Invention

### Technical Problem to be Solved

However, the present inventors have found that the hydrolysis of $LiPF_6$ is accelerated when $LiPF_6$ is used together with other electrolytes, particularly LiFSI, as an electrolyte for a secondary battery.

Accordingly, the present invention was intended to provide a bis(fluorosulfonyl)imide alkali-metal salt that does not accelerate decomposition of $LiPF_6$.

### Technical Solution

As a result of efforts to achieve the above object, the present invention is to provide a bis(fluorosulfonyl)imide alkali-metal salt with decomposition stability for $LiPF_6$, which is measured by: dissolving 1 g of $LiPF_6$ and 1 g of bis(fluorosulfonyl)imide alkali-metal salt (MFSI) in a mixed solvent of 50 g of water and 50 g of ethylene carbonate (EC)to prepare solution Ai;

measuring a concentration (Ci) of $PF_6^-$ in the solution Ai by ion chromatography;
stirring the solution Ai at room temperature for 24 hours to obtain solution At; and
measuring a concentration (Ct) of $PF_6^-$ in the solution At by ion chromatography, wherein the decomposition stability for $LiPF_6$ calculated by the following Equation (1) is 95% or more.

[Equation 1]

$$LiPF_6 \text{ Decomposition Stability } \% = Ct/Ci \times 100$$

The present invention is characterized in that the pH of the solution becomes 6-8 when the bis(fluorosulfonyl)imide alkali-metal salt, which increases the decomposition stability for $LiPF_6$, is dissolved in water at a concentration

of 10% by weight ("wt.%").

## Effect of Invention

The bis(fluorosulfonyl)imide alkali-metal salt for enhancing the stability against decomposition of $LiPF_6$ according to the present invention has an effect of increasing stability without accelerating decomposition of $LiPF_6$ in an electrolyte. The present invention further has an effect of preventing destruction of a coating of positive electrode and negative electrode by reducing the generation of HF in the electrolyte. The present invention further has an effect of preventing a decrease in charge/discharge capacity of a battery, eventually, an effect of extending the lifespan of the battery.

## Best Mode for Carrying out Invention

Hereinafter, the present invention will be described in detail. The terms or words used in this specification and claims should not be construed as being limited to their usual or dictionary meanings and, based on the principle that the inventors can properly define the concept of terms in order to best explain their invention, it should be interpreted as a meaning and concept consistent with the technical idea of the present invention.

The present invention relates to an alkali-metal salt of bis(fluorosulfonyl)imide that improves the decomposition stability for $LiPF_6$.

The present invention has tried to provide a bis(fluorosulfonyl)imide alkali-metal salt that can increase $LiPF_6$ decomposition stability even when it is used together with $LiPF_6$ in an electrolyte, and therefore, has discovered that $LiPF_6$ decomposition stability can be improved in the case of bis(fluorosulfonyl)imide alkali-metal salt that has $LiPF_6$ decomposition stability, which is measured by: dissolving 1 g of $LiPF_6$ and 1 g of bis(fluorosulfonyl)imide alkali-metal salt (MFSI) in a mixed solvent of 50 g of water and 50 g of ethylene carbonate (EC) to prepare solution Ai; measuring a concentration (Ci) of $PF_6^-$ in the solution Ai by ion chromatography; stirring the solution Ai at room temperature for 24 hours to obtain solution At; and measuring a concentration (Ct) of $PF_6^-$ in the solution At by ion chromatography, wherein the $LiPF_6$ decomposition stability calculated by the following Equation (1) is 95% or more.

[Equation 1]

$$LiPF_6 \text{ Decomposition Stability } \% = Ct/Ci \times 100$$

The alkali-metal (M) may be Li, Na, K or Cs, and is preferably Li.

When a concentration of $PF_6^-$ after dissolving 1 g of bis(fluorosulfonyl)imide alkali-metal salt and 1 g of $LiPF_6$ in a solvent prepared by mixing water and ethylene carbonate (EC) in a weight ratio of 1:1 and stirring the solution at room temperature for 24 hours is 95% or more compared to initial $PF_6^-$, $LiPF_6$ is not decomposed but is stable even if the bis(fluorosulfonyl)imide alkali-metal salt is used in an electrolyte along with $LiPF_6$, thereby preventing destruction of the positive and negative electrode films. Further, a decrease in the charge and discharge capacity of the battery may be inhibited, so that the lifespan of a battery can be extended. On the other hand, when the above value is less than 95%, $LiPF_6$ in the electrolyte may be decomposed and the films of the positive electrode and the negative electrode may be destructed, therefore, the lifespan of the battery may be shortened.

The ion chromatography method of the present invention may be a measurement method that includes mixing an internal standard material, that is, 1 g of 1 wt.% $LiOSO_2CF_3$ (LiOTf) solution (using a mixed solvent of 50 g of water and 50 g of ethylene carbonate) and 1 g of the above solution Ai and comparing peak intensities (peak intensity of $PF_6^-$/peak intensity of OTf) to thus measure the same.

The bis(fluorosulfonyl)imide alkali-metal salt may be produced according to a process that includes: a step of preparing ammonium bis(fluorosulfonyl)imide ($NH_4FSI$) using bis(chlorosulfonyl)imide (HCSI) and $NH_4F$; and a step of using the above ammonium bis(fluorosulfonyl)imide and an alkali-metal salt compound to prepare the bis(fluorosulfonyl)imide alkali-metal salt.

However, in the above method, a sulfamic acid derivative represented by Formula (1) below may be generated as a by-product, which acts as a cause of deteriorating the quality of the bis(fluorosulfonyl)imide alkali-metal salt. The sulfamic acid derivative of Formula (1) is expected to be produced by hydrolysis of HCSI.

Formula (1)

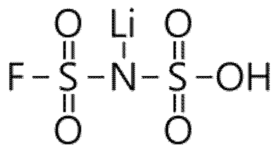

When the MFSI including the sulfamic acid derivative is included in the electrolyte together with $LiPF_6$, the sulfamic acid derivative may act as a catalyst to promote the hydrolysis of $LiPF_6$ as a strong acid, and HF is generated in a secondary battery according to the following equation. The generated HF acts on the SEI film of the positive electrode or the negative electrode to accelerate the decomposition of the SEI film, resulting in shortening the lifespan of the battery. If LiFSI is described as an example, it is as shown in Equation (2) below.

[Equation 2]

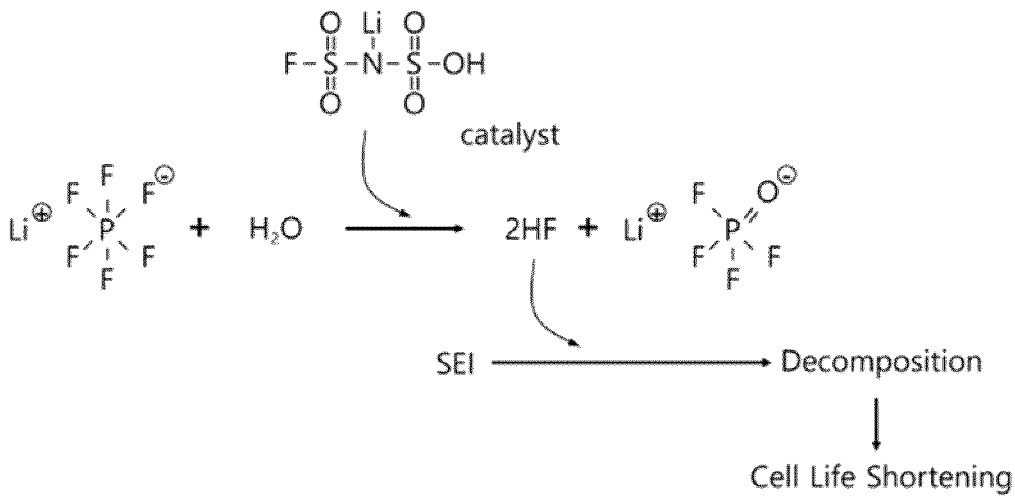


Therefore, a content of sulfamic acid derivatives in MFSI needs to be adjusted.

As a result of efforts to provide MFSI with controlled content of sulfamic acid derivatives, if reducing a content of water present in the solvent used in the preparation of MFSI or a content of HF in the reaction solution, it is possible to provide MFIS with decreased content of the sulfamic acid derivative. To this end, it was found that decomposition of $LiPF_6$ in the electrolyte can be prevented. In particular, when the water content in the reaction solvent for MFSI production reaction is not more than 500 ppm by weight ("wt. ppm"), hydrolysis of HCSI and the like is reduced, thereby reducing the production of sulfamic acid derivatives. As a result, a bis(fluorosulfonyl)imide alkali-metal salt, which enhances $LiPF_6$ decomposition stability, can be provided.

The present invention is characterized in that the bis(fluorosulfonyl)imide alkali-metal salt, which improves $LiPF_6$ decomposition stability, contains sulfamic acid derivatives in an amount of 500 wt. ppm or less. When the sulfamic acid derivative is included in an amount of 500 wt. ppm or less, there is an effect of not accelerating decomposition of $LiPF_6$ even if the bis(fluorosulfonyl)imide alkali-metal salt is included in the electrolyte together with $LiPF_6$.

The bis(fluorosulfonyl)imide alkali-metal salt, which increases $LiPF_6$ decomposition stability of the present invention, may be produced according to a process that includes: a step of reacting bis(chlorosulfonyl)imide (HCSI) and $NH_4F$ in solvent 1 while suppressing hydrolysis of bis(chlorosulfonyl)imide to thus prepare ammonium bis(fluorosulfonyl)imide ($NH_4FSI$); and a step of using the ammonium bis(fluorosulfonyl)imide and an alkali-metal salt compound to prepare the bis(fluorosulfonyl)imide alkali-metal salt.

In the present invention, the water content of the solvent 1 may be 500 wt. ppm in order to suppress the hydrolysis of bis(chlorosulfonyl)imide.

The bis(fluorosulfonyl)imide alkali-metal salt that improves $LiPF_6$ decomposition stability of the present invention may be produced according to a process including:

(a) reacting bis(chlorosulfonyl)imide and $NH_4F$ in solvent 1 while suppressing hydrolysis of bis(chlorosulfonyl)imide under a nitrogen atmosphere to thus prepare ammonium bis(fluorosulfonyl)imide;
(b) reacting the ammonium bis(fluorosulfonyl)imide prepared in step (a) with an alkali-metal salt to prepare a bis(fluorosulfonyl)imide alkali-metal salt;
(c) obtaining a precipitate by introducing solvent 2 as an anti-solvent to the reaction solution of step (b); and
(d) filtering the solution of step (c) and recovering the precipitate to obtain the bis(fluorosulfonyl)imide alkali-metal salt.

The reaction in step (a) is shown in the following equation.

[Equation 3]

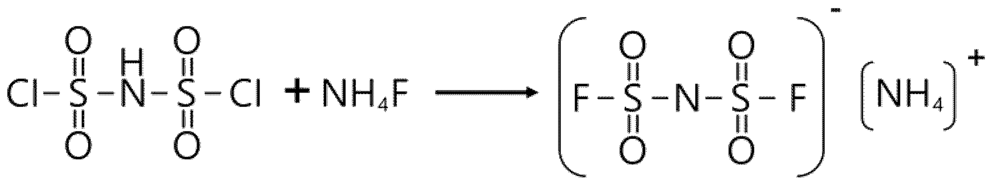

In the above reaction, $NH_4F$ may be reacted in an amount of 2 to 10 moles, preferably 2.5 to 5 moles, based on 1 mole of bis(chlorosulfonyl)imide. In this case, chlorine in bis(chlorosulfonyl)imide can be sufficiently substituted with fluorine.

In the process of Equation (3) above, various acids are produced. Among them, HF is also generated, and if this is removed from the reaction solution by nitrogen gas bubbling, the next process can proceed in a state in which HF is significantly removed, thereby reducing the hydrolysis of starting materials or intermediate products. Nitrogen gas bubbling may be conducted in the reaction solution during the reaction or after completion of the reaction and before step (b). Nitrogen gas bubbling may be conducted until the pH of the gas discharged from the reaction solution becomes 6-8. More preferably, the nitrogen gas bubbling is stopped when the pH reaches 6.5-7.5, and it is even more preferable to stop the nitrogen gas bubbling when the pH reaches 6.8-7.2.

Solvent 1 in step (a) is a solvent capable of dissolving bis(fluorosulfonyl)imide alkali-metal salt, and preferably, may be any one or more selected from the group consisting of diethyl ether, diisopropyl ether, methyl-t-butyl ether, methyl acetate, ethyl acetate and butyl acetate.

The inventors of the present invention have recognized that, when the solvent contains a large amount of water, hydrolysis of reactants or products can occur, and in particular, when an acid such as HF is present in the reaction solution, a hydrolysis reaction such as Equation (4) below may be accelerated. As a result of such hydrolysis reaction, sulfamic acid derivatives may be generated in the reaction solution.

[Equation 4]

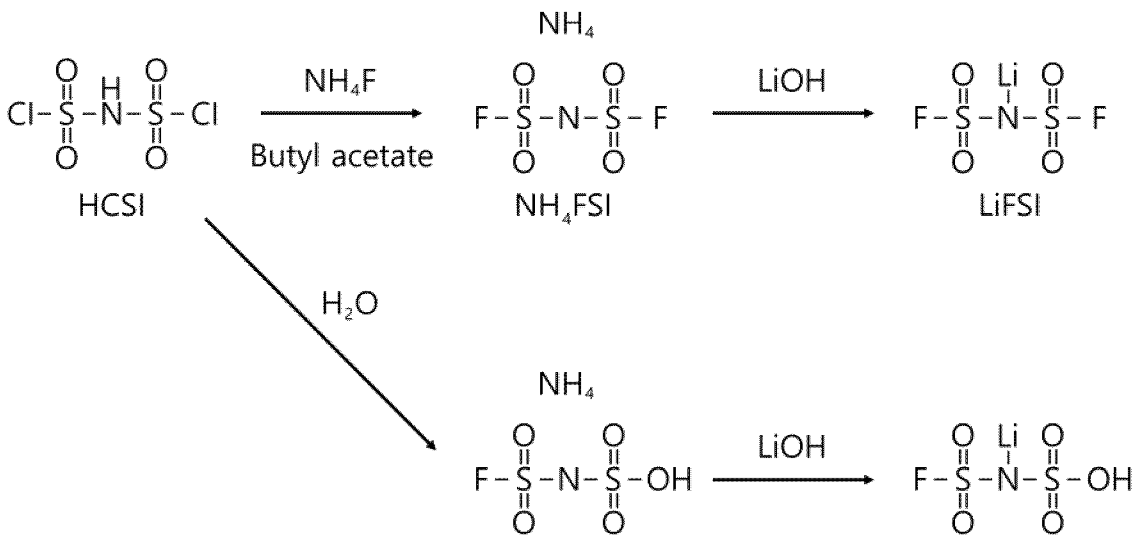


Therefore, with regard to the present invention, in order to prevent hydrolysis of reactants or products, it is necessary to reduce the content of HF in the reaction solution and to set the water content in the solvent 1 to 500 wt. ppm or less, preferably 200 wt. ppm or less.

A temperature during fluorination in step (a) may be appropriately adjusted according to the progress of reaction, but is preferably -40 to 200 °C, more preferably -20 to 100 °C. A time required for the reaction may vary depending on the scale of the reaction, but is preferably 0.1 to 48 hours, more preferably 0.5 to 24 hours.

After step (a) and before step (b), the reaction product is cooled to room temperature and insoluble substances such as $NH_4Cl$ are filtered out to obtain a filtrate containing ammonium bis(fluorosulfonyl)imide.

The step (b) is a step of preparing a bis(fluorosulfonyl)imide alkali-metal salt by reacting the obtained ammonium bis(fluorosulfonyl)imide with an alkali-metal salt. In the above reaction, ammonium bis(fluorosulfonyl)imide may be recovered as a solid and then reacted with an alkali-metal salt. However, in the case where an alkali-metal salt is added to the reaction product of step (a) without recovery of ammonium bis(fluorosulfonyl)imide as a solid, there is an advantage in that a separate ammonium bis(fluorosulfonyl)imide recovery process is not required, whereby a processing time and effort can be reduced, and product loss may also be reduced.

The alkali-metal salt may be MF, MOH, $M_2CO_3$, etc., preferably MOH and more preferably LiOH.

An amount of the alkali-metal salt to be used is preferably 1 to 10 moles, more preferably 1 to 5 moles, based on 1 mole of ammonium bis(fluorosulfonyl)imide.

The temperature at the time of reaction with the alkali-metal salt is not particularly limited, but is preferably 0 to 200 °C, more preferably 10 to 100 °C. The time required for the reaction may vary depending on the scale of the reaction, but is preferably 0.1 to 48 hours, more preferably 0.5 to 24 hours.

The reaction may be carried out even under normal pressure, but when carried out under reduced pressure, by-product ammonia is removed and the desired product is easily synthesized. In the case of reducing the pressure, the reaction pressure is not particularly limited, but is preferably less than atmospheric pressure to 0.01 torr, and more preferably a degree of pressure at which the solvent refluxes at 0 to 100 °C.

A reaction vessel for producing the bis(fluorosulfonyl)imide alkali-metal salt of the present invention is more preferably made of a resin such as fluorine resin or polyethylene.

After the step (b), an extraction step with water may be included to remove salts and the like generated as by-products.

Solvent 2 in step (c) is an anti-solvent that does not dissolve a bis(fluorosulfonyl)imide alkali-metal salt and may be one or more selected from the group consisting of toluene, hexane, heptane, chloroform, dichloromethane, etc. The solvent 2 may be added after removing some of the solvent from the reaction solution.

In the step (c), the anti-solvent may be added in an amount of 50 to 500 parts by weight ("wt. parts"), more preferably 80 to 300 wt. parts, based on 100 wt. parts of the bis(fluorosulfonyl)imide alkali-metal salt. When an input amount of the anti-solvent is less than the above range, it is not preferable because a sufficient amount of bis(fluorosulfonyl)imide alkali-metal salt may not be obtained. On the other hand, when it exceeds the above range, effects thereof do not increase, whereas other unnecessary by-products may precipitate and thus are undesirable.

The bis(fluorosulfonyl)imide alkali-metal salt having decomposition stability for $LiPF_6$ prepared by the method of the present invention may have a sulfamic acid content of 500 wt. ppm or less. The bis(fluorosulfonyl)imide alkali-metal salt having decomposition stability for $LiPF_6$ with a content of sulfamic acid of 500 wt. ppm or less is characterized in that the pH of the solution becomes 6-8 when it is dissolved in water at a concentration of 10 wt. %.

The bis(fluorosulfonyl)imide alkali-metal salt obtained according to the manufacturing method of the present invention may increase the stability for $LiPF_6$ against decomposition, and thus can be used together with $LiPF_6$ in an electrolyte. Therefore, it can be suitably used as a material for ion conductors that constitute primary batteries, secondary batteries such as lithium ion secondary batteries, electrochemical devices such as electrolytic condensers, electric double layer capacitors, fuel cells, solar cells, electrochromic elements, etc.

**Mode for Carrying out Preferred Embodiment of Invention**

Hereinafter, preferred embodiments are presented to aid understanding of the present invention, but the following examples are merely illustrative of the present invention. Thus, it is obvious to those skilled in the art that various changes and modifications are possible within the scope and spirit of the present invention, and such changes and modifications fall within the scope of the claims of the present invention.

Example 1: Synthesis of bis(fluorosulfonyl)imide lithium salt No. 1

79.6 g (2.15 moles) of dehydrated ammonium fluoride and 600 g of butyl acetate having water content of 100 wt. ppm were introduced to a reactor provided with an agitator, a condenser and a thermometer at room temperature under a nitrogen atmosphere. While agitating the mixture, 100 g (0.47 mole) of bis(chlorosulfonyl)imide was slowly added, followed by heating the solution to 80 °C and then reacting the same for 2 hours.

The temperature was cooled to 60 °C without removing the solid phase from the reactant, and nitrogen gas bubbling was carried out. The pH of the blown gas was checked using pH paper at 5-minute intervals (initial pH of about 3), followed by stopping nitrogen gas bubbling when the pH reached 7. The reaction solution was cooled down to 10°C or lower and then filtered.

25.5 g (0.61 mole) of lithium hydroxide monohydrate was added to the filtrate containing ammonium bis(fluorosulfonyl)imide and stirred. Thereafter, the reaction proceeded at less than 5 °C for 4 hours and then was terminated.

After adding 75 g of distilled water and stirring, the layers were separated to remove the distilled water layer. After adding 23 g of distilled water and stirring again, the layers were separated to remove the distilled water layer again. After filtering and concentrating the obtained organic layer, 208 g of toluene was added and filtered to obtain a solid, followed by vacuum drying to obtain a bis(fluorosulfonyl)imide lithium salt having $LiPF_6$ decomposition stability. When the bis(fluorosulfonyl)imide lithium salt was dissolved in water at a concentration of 10 wt.%, the pH of the solution was 7.4.

Example 2: Synthesis of bis(fluorosulfonyl)imide lithium salt No. 2

A bis(fluorosulfonyl)imide lithium salt having $LiPF_6$ decomposition stability was obtained in the same manner as in Example 1, except that butyl acetate having a water content of 200 wt. ppm was used. When the bis(fluorosulfonyl)imide lithium salt was dissolved in water at a concentration of 10 wt.%, the pH of the solution was 7.2.

Example 3: Synthesis of bis(fluorosulfonyl)imide lithium salt No. 3

A bis(fluorosulfonyl)imide lithium salt having $LiPF_6$ decomposition stability was obtained in the same manner as in Example 1, except that butyl acetate having a water content of 400 wt. ppm was used. When the bis(fluorosulfonyl)imide lithium salt was dissolved in water at a concentration of 10 wt.%, the pH of the solution was 7.1.

Comparative Example 1

A bis(fluorosulfonyl)imide lithium salt was obtained in the same manner as in Example 1, except that gas bubbling was not carried out and butyl acetate having a water content of 650 wt. ppm was used. When the bis(fluorosulfonyl)imide lithium salt was dissolved in water at a concentration of 10 wt.%, the pH of the solution was 5.9.

Comparative Example 2

A bis(fluorosulfonyl)imide lithium salt was obtained in the same manner as in Example 1, except that gas

bubbling was not carried out and butyl acetate having a water content of 2,000 wt. ppm was used. When the bis(fluorosulfonyl)imide lithium salt was dissolved in water at a concentration of 10 wt.%, the pH of the solution was 5.7.

Experimental Example 1: $LiPF_6$ Decomposition Stability Test

1 g of the bis(fluorosulfonyl)imide lithium salt prepared in Example 1 and 1 g of $LiPF_6$ were dissolved in a mixed solvent of 50 g of water and 50 g of ethylene carbonate (EC) to prepare a solution Ai, followed by measuring a concentration (Ci) of $PF_6^-$ through ion chromatography.

The solution Ai was stirred at room temperature for 24 hours to obtain a solution At, and a concentration (Ct) of $PF_6^-$ in the solution At was measured by ion chromatography, followed by obtaining decomposition stability for $LiPF_6$ according to the following Equation (1), which was shown in Table 1 below.

[Equation 1]

$$LiPF_6 \text{ Decomposition Stability } \% = Ct/Ci \times 100$$

The decomposition stability for $LiPF_6$ was measured in the same manner using the bis(fluorosulfonyl)imide lithium salt obtained in Example 2, Example 3, Comparative Example 1 and Comparative Example 2, respectively, and the results are shown in Table 1 below.

[Ion chromatography method]

The ion chromatography method used in the present invention is as follows.

When measuring the concentration, a non-hydrolyzable lithium salt as an internal standard, that is, 1 g of 1 wt.% $LiOSO_2CF_3$ (LiOTf) solution (a mixed solvent of 50 g water and 50 g ethylene carbonate was used) and 1g of the solution Ai were admixed and peak intensities (peak intensity of $PF_6^-$/peak intensity of OTf) were compared to thus measure the concentration.

In particular, 1 L solution prepared by dissolving 0.252 g of sodium bicarbonate and 0.2544 g of sodium carbonate in water was used as a developing solvent, and a Dionex IonPac AS23-4um IC column from Thermo Fisher Scientific was used as a column.

[TABLE 1]

| | Exampl e 1 | Exampl e 2 | Exampl e 3 | Comparativ e Example 1 | Comparativ e Example 2 |
|---|---|---|---|---|---|
| Ci | 121 | 121 | 119 | 120 | 118 |
| Ct | 120 | 118 | 115 | 108 | 85 |
| $LiPF_6$ decompositio n stability | 98.8% | 97.5% | 96.6% | 90.0% | 72.1% |

The $PF_6$ decomposition stability measured by the method of the present invention was 95% or more in the case of the bis(fluorosulfonyl)imide lithium salt prepared in Examples 1 to 3 so that, when the material is mixed with $LiPF_6$ and used as an electrolyte, it can prevent decomposition of $LiPF_6$ and may be efficiently used. On the other hand, in the case of the bis(fluorosulfonyl)imide lithium salt prepared in Comparative Example, the decomposition stability was less than 90%. In this case, when the material is mixed with $LiPF_6$ and used as an electrolyte, the decomposition of $LiPF_6$ will be accelerated.

**Industrial Applicability**

The bis(fluorosulfonyl)imide alkali-metal salt obtained according to the manufacturing method of the present invention increases the stability of $LiPF_6$ against decomposition, and thus can be used together with $LiPF_6$ in an electrolyte. Accordingly, it can be used for primary batteries, secondary batteries such as lithium ion secondary batteries, electrochemical devices such as electrolytic condensers, electric double layer capacitors, fuel cells, solar cells, electrochromic devices, or the like.

## Claims

1. A bis(fluorosulfonyl)imide alkali-metal salt having $LiPF_6$ decomposition stability, which is measured by: dissolving 1 g of $LiPF_6$ and 1 g of bis(fluorosulfonyl)imide alkali-metal salt (MFSI) in a mixed solvent of 50 g of water and 50 g of ethylene carbonate (EC) to prepare solution Ai;

   measuring a concentration (Ci) of $PF_6^-$ in the solution Ai by ion chromatography;
   stirring the solution Ai at room temperature for 24 hours to obtain solution At; and
   measuring a concentration (Ct) of $PF_6^-$ in the solution At by ion chromatography, wherein the $LiPF_6$ decomposition stability calculated by the following Equation (1) is 95% or more.

   [Equation 1]

   $$LiPF_6 \text{ Decomposition Stability } \% = Ct/Ci \times 100$$

2. The salt according to claim 1, wherein the ion chromatography method is a measurement method that includes: mixing an internal standard material, that is, 1 g of 1 wt.% $LiOSO_2CF_3$ (LiOTf) solution and 1 g of the above solution Ai; and comparing peak intensities (peak intensity of $PF_6^-$/peak intensity of OTf) to thus measure the same.

3. The salt according to claim 1, wherein the bis(fluorosulfonyl)imide alkali-metal salt is produced according to a process including: a step of reacting bis(chlorosulfonyl)imide (HCSI) and $NH_4F$ in solvent 1 while suppressing hydrolysis of bis(chlorosulfonyl)imide to thus prepare ammonium bis(fluorosulfonyl)imide ($NH_4FSI$); and
   a step of using the ammonium bis(fluorosulfonyl)imide and an alkali-metal salt compound to prepare the bis(fluorosulfonyl)imide alkali-metal salt.

4. The salt according to claim 3, wherein the bis(fluorosulfonyl)imide alkali-metal salt is produced according to a process including: (a) reacting bis(chlorosulfonyl)imide and $NH_4F$ in solvent 1 while suppressing hydrolysis of bis(chlorosulfonyl)imide under a nitrogen atmosphere to thus prepare ammonium bis(fluorosulfonyl)imide;

   (b) reacting the ammonium bis(fluorosulfonyl)imide prepared in step (a) with an alkali-metal salt to prepare a bis(fluorosulfonyl)imide alkali-metal salt;
   (c) obtaining a precipitate by introducing solvent 2 as an anti-solvent to the reaction solution of step (b); and
   (d) filtering the solution of step (c) and recovering the precipitate to obtain the bis(fluorosulfonyl)imide alkali-metal salt.

5. The salt according to claim 4, wherein HF in the reaction solution is removed by nitrogen gas bubbling in the reaction solution during a reaction in step (a) or after the reaction and before step (b).

6. The salt according to claim 5, wherein the nitrogen gas bubbling proceeds until the pH of gas discharged from the reaction solution reaches 6 to 8.

7. The salt according to claim 4, wherein a water content of solvent 1 is 500 wt. ppm or less.

8. The salt according to claim 4, wherein solvent 1 is one or more selected from the group consisting of diethyl ether, diisopropyl ether, methyl-t-butyl ether, methyl acetate, ethyl acetate and butyl acetate.

9. The salt according to claim 4, wherein solvent 2 is one or more selected from the group consisting of toluene, hexane, heptane, chloroform and dichloromethane.

10. The salt according to claim 4, wherein a process of filtering the reaction product after step (a) to remove insoluble materials is further carried out.

11. The salt according to claim 1, wherein, when the bis(fluorosulfonyl)imide alkali-metal salt is dissolved in water to reach a concentration of 10 wt.%, the pH of the solution becomes 6 to 8.

12. A method for production of bis(fluorosulfonyl)imide alkali-metal salt having $LiPF_6$ decomposition stability, comprising: (a) reacting bis(chlorosulfonyl)imide and $NH_4F$ in solvent 1 while suppressing hydrolysis of bis(chlorosulfonyl)imide

under a nitrogen atmosphere to thus prepare ammonium bis(fluorosulfonyl)imide;

(b) reacting the ammonium bis(fluorosulfonyl)imide prepared in step (a) with an alkali-metal salt to prepare a bis(fluorosulfonyl)imide alkali-metal salt;
(c) obtaining a precipitate by introducing solvent 2 as an anti-solvent to the reaction solution of step (b); and
(d) filtering the solution of step (c) and recovering the precipitate to obtain the bis(fluorosulfonyl)imide alkali-metal salt,
wherein solvent 1 contains water in an amount of 500 wt. ppm or less, and
wherein HF in the reaction solution is removed by nitrogen gas bubbling in the reaction solution during a reaction in step (a) or after the reaction and before step (b) .

**13.** The method according to claim 12, wherein the alkali-metal salt is added to the reaction solution obtained in step (a) without recovery of ammonium bis(fluorosulfonyl)imide as a solid in step (b).

**14.** The method according to claim 12, wherein the bis(fluorosulfonyl)imide alkali-metal salt has $LiPF_6$ decomposition stability, which is measured by: dissolving 1 g of $LiPF_6$ and 1 g of bis(fluorosulfonyl)imide alkali-metal salt (MFSI) in a mixed solvent of 50 g of water and 50 g of ethylene carbonate (EC) to prepare solution Ai;

measuring a concentration (Ci) of $PF_6^-$ in the solution Ai by ion chromatography;
stirring the solution Ai at room temperature for 24 hours to obtain solution At; and
measuring a concentration (Ct) of $PF_6^-$ in the solution At by ion chromatography, wherein the $LiPF_6$ decomposition stability calculated by the following Equation (1) is 95% or more.

[Equation 1]

$$LiPF_6 \text{ Decomposition Stability } \% = Ct/Ci \times 100$$

**INTERNATIONAL SEARCH REPORT**

International application No.
**PCT/KR2022/009210**

**A. CLASSIFICATION OF SUBJECT MATTER**

**C01B 21/086**(2006.01)i; **C01B 21/093**(2006.01)i

According to International Patent Classification (IPC) or to both national classification and IPC

**B. FIELDS SEARCHED**

Minimum documentation searched (classification system followed by classification symbols)

C01B 21/086(2006.01); C01B 21/093(2006.01); C01D 15/00(2006.01); C07C 303/40(2006.01); C07C 303/44(2006.01); C07C 311/48(2006.01); C07F 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 리튬 헥사플루오로포스페이트(LiPF6, lithium hexafluorophosphate), 비스(클로로설포닐)이미드(HCSI, bis(chlorosulfonyl)imide), 불화암모늄(NH4F, ammonium fluoride), 분해(decompose), 안정성(stability)

**C. DOCUMENTS CONSIDERED TO BE RELEVANT**

| Category* | Citation of document, with indication, where appropriate, of the relevant passages | Relevant to claim No. |
|---|---|---|
| Y | WO 2020-055030 A1 (CHUN BO., LTD.) 19 March 2020 (2020-03-19)<br>See paragraphs [0038]-[0042] and [0073]-[0086]; and claims 1-8. | 1-14 |
| Y | WO 2017-090877 A1 (LIM, Kwang Min) 01 June 2017 (2017-06-01)<br>See paragraphs [0032], [0033] and [0037]; and claims 1-10. | 1-14 |
| Y | KR 10-2019-0001092 A (LIM, Kwang Min) 04 January 2019 (2019-01-04)<br>See claims 1-21. | 1-14 |
| A | WO 2016-093399 A1 (CHUN BO., LTD.) 16 June 2016 (2016-06-16)<br>See claims 1-12. | 1-14 |
| A | KR 10-2013-0114713 A (NIPPON SODA CO., LTD.) 17 October 2013 (2013-10-17)<br>See claims 1-4. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 October 2022** | **19 October 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/009210**

| Patent document cited in search report | Publication date (day/month/year) | Patent family member(s) | Publication date (day/month/year) |
|---|---|---|---|
| WO 2020-055030 A1 | 19 March 2020 | KR 10-1982602 B1 | 27 May 2019 |
| WO 2017-090877 A1 | 01 June 2017 | CN 108368132 A | 03 August 2018 |
| | | EP 3381923 A1 | 03 October 2018 |
| | | EP 3381923 B1 | 21 April 2021 |
| | | HU E055587 T2 | 28 December 2021 |
| | | JP 2019-501858 A | 24 January 2019 |
| | | JP 6964595 B2 | 10 November 2021 |
| | | KR 10-1718292 B1 | 21 March 2017 |
| | | PL 3381923 T3 | 20 December 2021 |
| | | PL 3381923 T4 | 20 December 2021 |
| | | US 2018-0370799 A1 | 27 December 2018 |
| KR 10-2019-0001092 A | 04 January 2019 | KR 10-1955096 B1 | 06 March 2019 |
| WO 2016-093399 A1 | 16 June 2016 | None | |
| KR 10-2013-0114713 A | 17 October 2013 | CA 2826747 A1 | 16 August 2012 |
| | | CA 2826747 C | 09 February 2016 |
| | | CN 103347811 A | 09 October 2013 |
| | | CN 103347811 B | 19 August 2015 |
| | | EP 2674395 A1 | 18 December 2013 |
| | | EP 2674395 B1 | 27 December 2017 |
| | | ES 2656857 T3 | 28 February 2018 |
| | | JP 5729885 B2 | 03 June 2015 |
| | | KR 10-1744373 B1 | 07 June 2017 |
| | | SG 192258 A1 | 30 September 2013 |
| | | TW 201237018 A | 16 September 2012 |
| | | TW I519514 B | 01 February 2016 |
| | | US 2013-0323154 A1 | 05 December 2013 |
| | | US 9242862 B2 | 26 January 2016 |
| | | WO 2012-108284 A1 | 16 August 2012 |

Form PCT/ISA/210 (patent family annex) (July 2019)